# FASCICULE DE BREVET EUROPEEN

(11) **EP 1 515 860 B1**
(45) Date de publication et mention de la délivrance du brevet: **04.10.2006**
(21) Numéro de dépôt: 03759899.2
(22) Date de dépôt: 27.05.2003
(51) Int. Cl.: B60C 9/04, B60C 9/06, B60C 9/20

(54) **PNEUMATIQUE AVEC NAPPE SOMMET IMBRIQUEE DANS UNE NAPPE CARCASSE**
REIFEN MIT EINER IN EINER KARKASSLAGE ÜBERLAPPENDEN GÜRTELLAGE
TYRE WITH CROWN PLY OVERLAPPING IN A CASING PLY

(30) Priorité: 14.06.2002 FR 0207405
(43) Date de publication de la demande: 23.03.2005
(73) Titulaire: Société de Technologie Michelin, 63000 Clermont-Ferrand Cedex 09 (FR); MICHELIN RECHERCHE ET TECHNIQUE S.A., 1763 Granges-Paccot (CH)
(72) Inventeur: PANNING, Nathan, Simpsonville, SC 29681 (US)
(74) Mandataire: Dequire, Philippe Jean-Marie Denis
(86) Numéro de dépôt international: PCT/EP2003/005535
(87) Numéro de publication internationale: WO 2003/106197

(56) Documents cités:
- WO-A-99/56974
- FR-A- 1 413 102
- FR-A- 1 446 800
- US-A- 5 273 094
- PATENT ABSTRACTS OF JAPAN vol. 018, no. 398 (M-1645), 26 juillet 1994 (1994-07-26) & JP 06 115308 A (BRIDGESTONE CORP), 26 avril 1994 (1994-04-26)

## Description

La présente invention concerne les pneumatiques. Plus particulièrement, elle concerne la disposition et la configuration de la structure de renforcement dans la zone du sommet du pneumatique.

Le renforcement des carcasses des pneumatiques est à l'heure actuelle constitué par une ou plusieurs nappes (désignées classiquement « nappes carcasses » de par le procédé de fabrication classique sous la forme de produits semi-finis en forme de nappes), pourvues de renforts filaires le plus souvent radiaux. L'ancrage ou le maintien de ces nappes ou renforts s'effectue, de façon traditionnelle par un retournement d'une portion de nappe autour d'une tringle disposée dans le bourrelet du pneumatique.

Par ailleurs, il existe aujourd'hui des pneumatiques qui ne disposent pas du traditionnel retournement de nappe carcasse autour d'une tringle, ni même d'une tringle, selon le sens traditionnel de cet élément. Par exemple, le document EP 0 582 196, décrit une façon d'agencer une structure de renfort de type carcasse dans les bourrelets, en disposant de façon adjacente à ladite structure de renfort des filaments circonférentiels, le tout étant noyé dans un mélange caoutchoutique d'ancrage ou de liaison, de préférence à haut module d'élasticité. Plusieurs agencements sont proposés dans ce document. Ce document fait par ailleurs référence à des pneumatiques fabriqués sans l'aide de produits semi-finis sous forme de nappes. Par exemple, les fils des différentes structures de renfort sont appliqués directement sur les couches adjacentes de mélanges caoutchoutiques, le tout étant appliqué par couches successives sur un noyau ayant une forme permettant d'obtenir directement un profil s'apparentant au profil final du pneumatique en cours de fabrication. Ainsi, dans ce cas, plutôt que des « nappes carcasses » au sens classique, on retrouve plus spécifiquement des «renforts de type carcasse ».

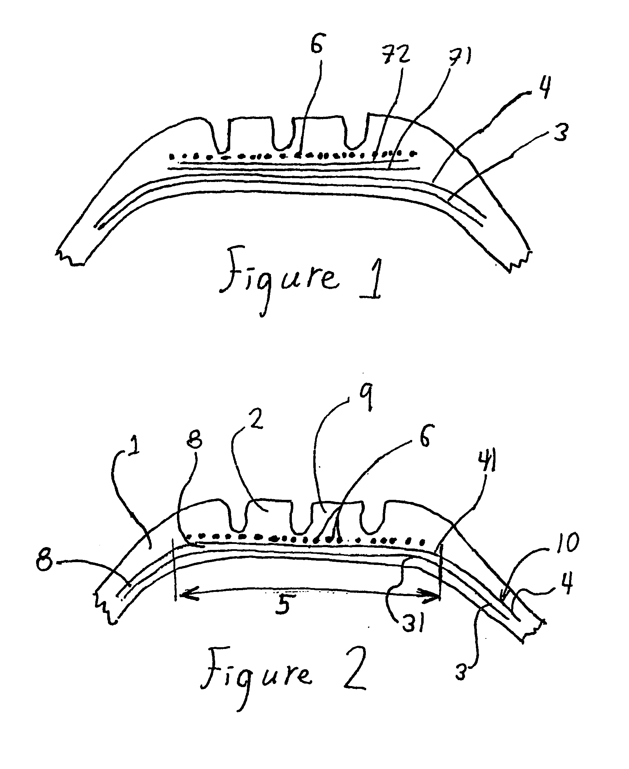

La figure 1 illustre un exemple de sommet de pneumatique de type connu, comportant deux nappes ou couches de renforcement de sommet disposées entre une structure double de renforcement de type carcasse et une série de fils circonférentiels répartis sur la largeur du sommet et formant en général un angle près de 0 degré par rapport à un plan méridien. Une telle configuration avec nappes ou couches indépendantes et superposées entraîne automatiquement une épaisseur importante de la zone du sommet, simplement pour loger ces différents éléments. Le poids du pneumatique est également affecté. Son coût de revient est aussi plus élevé dû d'une part aux matériaux plus nombreux (par exemple plus de nappes) et d'autre part aux plus nombreuses étapes de fabrication et assemblage requises.

Les documents WO-A-9 956 974 et JP-A-06 115 308 en sont aussi des exemples et décrivent des pneumatiques selon le préambule de la revendication 1.

La présente invention vise en outre à pallier ces différents inconvénients.

Pour ce faire, l'invention prévoit un pneumatique selon la revendication 1.

Un tel type d'arrangement permet de réduire l'épaisseur de la zone du sommet grâce à la suppression des couches de renforts séparées. On réduit de ce fait le nombre de composants avant assemblage. On obtient par ailleurs un produit plus léger. Enfin, la zone sommet étant simplifiée, la tâche du concepteur est plus aisée lors de l'élaboration de nouvelles architectures : la prédiction de l'effet d'une modification sur le comportement du pneumatique ainsi modifié est plus facile à réaliser et plus fiable. Les portions voisines des fils de structure de renfort de type carcasse peuvent être des portions de fils immédiatement voisins ou côte à côte ou juxtaposés. On a alors un ratio de un à un entre les différents types de fils. Selon diverses variantes de réalisation, l'armature peut être « allégée » avec une disposition ou ratio (entre les types de fils) tel qu'on retrouve un fil de renfort sommet à chaque 2, ou 3, ou même plus, fil d'une structure de renfort de type carcasse. Des ratios de type fractions, tels deux pour trois, ou trois pour quatre, etc, sont aussi possibles.

Autrement, l'armature est encore renforcée d'avantage, avec une disposition ou ratio (entre les types de fils) tel qu'on retrouve deux, ou trois, ou même plus, fils de renfort sommet entre chaque fil d'une structure de renfort de type carcasse. Une telle configuration peut s'avérer avantageuse par exemple dans des cas où on recherche un comportement de style sportif, ou pour favoriser la résistance aux chocs, de préférence pour un pneumatique qui n'a pas besoin de structures de renfort particulièrement renforcées ou rigides ou denses, comme par exemple pour des pneumatiques à flancs courts. Autrement, dans un cas où on ne cherche pas plus de raideur au niveau du sommet, on peut vouloir utiliser des câbles de renfort sommet plus fins, tout en augmentant leur nombre. Afin de ne pas avoir besoin d'augmenter en proportion le nombre de fils de la structure de renfort de type carcasse, on peut disposer les fils de renfort sommet dans une proportion de deux ou trois pour un ou pour deux fils de structure de renfort de type carcasse. D'autres ratios sont également possibles.

Les fils d'armature et les fils de structure de renfort de type carcasse sont radialement sensiblement coplanaires. Ces fils ont de préférence un cheminement sensiblement parallèle.

Les fils de la structure de renfort de type carcasse et les fils de renfort de sommet sont de préférence de nature différente. Selon un exemple de réalisation avantageux, les fils de la structure de renfort de type carcasse sont de type textile et les fils de renfort de sommet sont de type métallique. On utilise alors au mieux les complémentarités des différents matériaux.

Selon un exemple de réalisation avantageux de l'invention, les zones d'extrémités des fils de renfort de sommet sont radialement espacées par rapport au profil du fil de structure de renfort de type carcasse voisin. Les zones de concentration de contraintes sont ainsi isolées. Par ailleurs, le risque de dégradation des fils de la structure de renfort de type carcasse par contact avec les extrémités des fils de renfort de sommet est considérablement réduit.

Enfin, selon un mode de réalisation avantageux de l'invention, la zone du sommet du pneumatique comporte également au moins une couche de sommet supplémentaire. Cette couche comporte par exemple des fils de renfort orientés de préférence entre 20 et 60 degrés. Un tel mode de réalisation privilégie l'obtention d'une plus grande rigidité et d'une meilleure protection plutôt que la diminution d'épaisseur.

Enfin, on peut proposer un agencement de la zone basse du pneumatique qui procure un ancrage efficace et durable de la structure de renfort dans les bourrelets du pneumatique, qu'il s'agisse d'un ancrage classique avec retournement des structures de renfort autour d'une tringle disposée dans le bourrelet, ou encore d'une zone d'ancrage comportant une série de fils circonférentiels coopérant avec une portion adjacente de structure de renfort via un mélange d'ancrage. Un tel type d'ancrage est par exemple présenté dans le document EP 0 582 196.

Dans le présent mémoire, le terme "fil" ou filaire désigne en toute généralité aussi bien des monofilaments que des multifilaments, ou des assemblages comme des câbles, des retors ou bien encore n'importe quel type d'assemblage équivalent, et ceci, quels que soit la matière et le traitement de ces fils, par exemple traitement de surface ou enrobage ou préencollage pour favoriser l'adhérence sur le caoutchouc.

Pour rappel, "radialement vers le haut", ou "radialement supérieur" signifie vers les plus grands rayons.

On entend par "module d'élasticité" d'un mélange caoutchoutique, un module d'extension sécant obtenu à une déformation d'extension uniaxiale de l'ordre de 10% à température ambiante.

Une structure de renfort ou de renforcement de type carcasse sera dite radiale lorsque ses fils sont disposés à 90°, mais aussi, selon la terminologie en usage, à un angle proche de 90°.

Tous les détails de réalisation sont donnés dans la description qui suit, complétée par les figures 1 à 4 où:
la figure 1 est une coupe radiale montrant essentiellement le sommet d'une forme d'exécution d'un pneumatique selon l'art antérieur ;
la figure 2 est une coupe radiale montrant essentiellement le sommet d'une forme d'exécution d'un pneumatique selon l'invention;
la figure 3 illustre, au moyen d'une vue en perspective d'une coupe d'une portion d'un pneumatique, un exemple de cheminement d'une structure monofilaire de type carcasse ;
la figure 4 est une vue agrandie de la région de l'épaule d'une variante de la figure 2.

Le pneumatique comporte une structure de renfort 10 ou de renforcement de type carcasse pourvue de renforts configurés selon un agencement de type « bias ». Cette structure comporte de préférence trois portions : une de chaque côté du pneumatique, agencées le long des flancs et une portion centrale au sommet.

L'invention concerne une structure de renfort 10 munie de renforts doubles, à savoir un renfort interne 3 et un renfort externe 4, selon leur position respective au niveau du profil méridien du pneumatique. Les fils de cette structure sont disposés de manière adjacente et sensiblement parallèles l'un à l'autre. Les renforts interne et externe 3 et 4 sont espacés ou séparés l'un de l'autre par une couche de mélange caoutchoutique de séparation 8.

Afin de positionner les fils de renforcement de façon aussi précise que possible, il est très avantageux de confectionner le pneumatique sur un support central, par exemple un noyau sensiblement rigide imposant la forme de sa cavité intérieure. On applique sur ce noyau, dans l'ordre requis par l'architecture finale, tous les constituants du pneumatique, qui sont disposé directement à leur place finale, sans que le profil du pneumatique doive être retourné ou replié lors de la confection. Cette confection peut par exemple utiliser les dispositifs décrits dans le brevet EP 0 580 055, ainsi que la demande française 00/01394, pour la pose des fils de renfort de carcasse, et dans le document EP 0 264 600 pour la pose des gommes caoutchoutiques. Le pneumatique peut être moulé et vulcanisé comme exposé dans le brevet US 4 895 692.

Dans l'exemple illustré à la figure 1, montrant une disposition architecturale classique selon l'art antérieur, une nappe ou renfort sommet interne 71 et une nappe ou renfort sommet externe 72 sont disposées de manière adjacente et sensiblement parallèles l'une à l'autre. De préférence, l'orientation des fils des nappes est inversée et croisée. Un espace rempli de mélange caoutchoutique est prévu entre les deux nappes afin d'éviter tout contact entre elles.

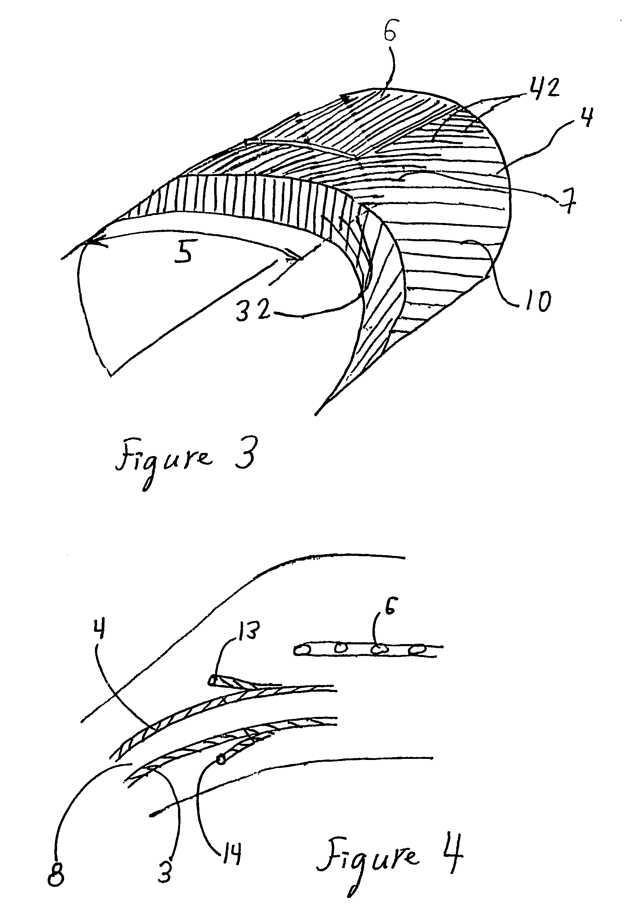

Selon l'invention, le sommet 2 comporte une armature intégrée et compacte constituée d'au moins deux armatures de sommet, procurant à cette zone du pneumatique la protection et la rigidité requises. Dans l'exemple illustré aux figures 2 et 3, montrant un mode de réalisation conforme à l'invention, une zone renforcée 5 du sommet est constituée des portions armées de structures de renfort de type carcasse 31 et 41 passant par la zone du sommet, avec des éléments de renforcement 32, 42 intégrés à ces structures ou disposées sensiblement dans un même plan. De préférence, l'orientation des fils des structures renforcées 31 et 41 est inversée et croisée. Un espace 8 rempli de mélange caoutchoutique est prévu entre les deux structures 31 et 41 afin d'éviter tout contact entre elles. L'armature est réalisée au moyen d'une série de fils de renfort de sommet 32, 42 chacun disposés, au niveau du sommet, entre deux fils voisins de structure de renfort de type carcasse.

Grâce à la suppression des nappes sommet d'armature, le nombre de couches est réduit : d'une part par la suppression de certaines couches d'armature, d'autre part, par réduction du nombre de couches ou d'épaisseur totale de mélange de séparation nécessaire pour éviter l'interférence entre les couches.

D'autres types d'éléments structuraux peuvent également être prévus dans l'une ou l'autre des portions du pneumatique. Par exemple, dans l'exemple des figures 2 et 3, des fils circonférentiels 6 disposés sensiblement à zéro degré et sensiblement parallèles les uns aux autres sont prévus dans la région du sommet du pneumatique. Dans l'exemple illustré, les fils sont agencés radialement extérieurement par rapport à la structure sommet externe 41. Il pourrait en être autrement, sans sortir du cadre de l'invention. Ainsi, les fils circonférentiels 6 pourraient être disposés radialement intérieurement par rapport aux structures sommet 31 et 41, voire entre ces mêmes nappes.

Les fils d'armature peuvent être de nature similaire ou non à ceux des structures de renfort de type carcasse. Les fils sont avantageusement en aramide, hybride, PET, ou PEN, nylon, rayonne ou encore de type métallique.

Les dimensions, (diamètre et longueur), l'écartement circonférentiel, et la position radiale de l'armature peuvent varier selon une infinité de possibilités. Ces caractéristiques sont définies en fonction des qualités recherchées au niveau de la zone sommet du pneumatique, telles la rigidité, le confort, l'endurance, etc.

Une bande de roulement 9 est prévue dans la portion radialement externe du sommet.

La présence d'un sommet aminci permet d'une part d'alléger le pneumatique, et d'autre part une éventuelle modulation des propriétés mécaniques au niveau du sommet.

La figure 4 illustre un exemple dans lequel les portions d'extrémité 13 et 14 sont retournées axialement vers l'extérieur ou vers l'intérieur, de façon à se terminer au moins partiellement dans une position radiale différente de la portion voisine de la structure de renfort de type carcasse.

## Revendications

1. Pneumatique comportant au moins deux structures de renfort de type carcasse (10), l'une interne (3) et l'autre externe (4), chacune desdites structures de renfort de type carcasse s'étendant circonférentiellement depuis le bourrelet vers ledit flanc, et est ancrée de chaque côté du pneumatique dans un bourrelet dont la base est destinée à être montée sur un siège de jante, chaque bourrelet se prolongeant radialement vers l'extérieur par un flanc, les flancs rejoignant radialement vers l'extérieur une bande de roulement, une armature de sommet intégrée auxdites structures de renforts, comprenant, pour chaque structure de renfort, une série de fils de renfort de sommet (32, 42) dont chacun est disposé de façon à s'étendre transversalement sensiblement entre deux portions voisines des fils de ladite structure de renfort de type carcasse, les fils d'armature et les fils de structure de renfort de type carcasse étant, pour chacune desdites structures, radialement sensiblement coplanaires **caractérisé en ce que** les fils des structures de renfort interne et externe sont disposés selon des angles opposés et sensiblement symétriques compris entre 30 et 70 degrés relativement à la direction circonférentielle.

2. Pneumatique selon la revendication 1, dans lequel les fils d'armature de sommet et les fils de structure de renfort ont de préférence un cheminement sensiblement parallèle.

3. Pneumatique selon l'une des revendications précédentes, dans lequel les fils de la structure de renfort de type carcasse et les fils de renfort de sommet sont de nature différente.

4. Pneumatique selon la revendication 3, dans lequel les fils de la structure de renfort de type carcasse sont de type textile et les fils de renfort de sommet sont de type métallique.

5. Pneumatique selon l'une des revendications précédentes, dans lequel les zones d'extrémités des fils de renfort de sommet sont radialement espacées par rapport au profil du fil de structure de renfort de type carcasse voisin.

6. Pneumatique selon l'une des revendications précédentes, comportant également au moins une couche de sommet supplémentaire.

## Claims

1. Tyre comprising at least two carcass-type reinforcing structures (10), one internal (3) and the other external (4), each of the said carcass-type reinforcing structures extending circumferentially from the tyre bead towards the said sidewall and being anchored on each side of the tyre in a tyre bead whose base is designed to be mounted on a rim seat, each bead being extended radially outwards by a sidewall, the sidewalls being connected radially outwards to a tread, a crown reinforcement being integrated with the said reinforcing structures and comprising, for each reinforcing structure, a series of crown reinforcement filaments (32, 42) each of which is arranged so as to extend transversely essentially between two neighbouring portions of the filaments of the said carcass-type reinforcing structure, the reinforcement filaments and the filaments of the carcass-type reinforcing structure being radially essentially coplanar for each of the said structures **characterised in that** the filaments of the internal and external reinforcing structures are arranged at opposite and essentially symmetrical angles of between 30° and 70° relative to the circumferential direction.

2. Tyre according to Claim 1, in which the filaments of the crown reinforcement and the filaments of the reinforcing structure preferably have essentially parallel paths.

3. Tyre according to any of the preceding claims, in which the filaments of the carcass-type reinforcing structure and the crown reinforcement filaments are of different nature.

4. Tyre according to Claim 3, in which the filaments of the carcass-type reinforcing structure are of the textile type and the crown reinforcement filaments are of the metallic type.

5. Tyre according to any of the preceding claims, in which the end zones of the crown reinforcement filaments are radially spaced relative to the profile of the filament of the neighbouring carcass-type reinforcing structure.

6. Tyre according to any of the preceding claims, also comprising at least one supplementary crown layer.

## Patentansprüche

1. Luftreifen, der mindestens zwei Verstärkungsstrukturen vom Karkassentyp (10) umfasst, eine innere (3) und eine äußere (4) Struktur, wobei sich jede dieser Verstärkungsstrukturen vom Karkassentyp in Umfangsrichtung vom Wulst zur Flanke erstreckt und auf jeder Seite des Luftreifens in einem Wulst verankert ist, dessen Basis auf einen Felgensitz montiert sein soll, sich jeder Wulst radial nach außen in einer Flanke fortsetzt, die Flanken radial nach außen mit einem Laufstreifen zusammentreffen, eine in die Verstärkungsstrukturen integrierte Scheitelbewehrung für jede Verstärkungsstruktur eine Reihe von Drähten zur Scheitelverstärkung (32, 42) umfasst, die jeweils so angeordnet ist, dass sie sich transversal in etwa zwischen zwei benachbarten Abschnitten der Drähte dieser Verstärkungsstruktur vom Karkassentyp erstreckt, wobei für jede dieser Strukturen die Drähte der Bewehrung und die Drähte der Verstärkungsstruktur vom Karkassentyp radial etwa coplanar sind, **dadurch gekennzeichnet, dass** die Drähte der inneren und äußeren Verstärkungsstruktur in Bezug auf die Umfangsrichtung in entgegengesetzten und etwa symmetrischen Winkeln von 30 bis 70 Grad angeordnet sind.

2. Luftreifen nach Anspruch 1, bei dem die Drähte der Scheitelbewehrung und die Drähte der Verstärkungsstruktur vorzugsweise in etwa parallel verlaufen.

3. Luftreifen nach einem der vorhergehenden Ansprüche, bei dem die Drähte der Verstärkungsstruktur vom Karkassentyp und die Drähte der Scheitelverstärkung in ihrer Art unterschiedlich sind.

4. Luftreifen nach Anspruch 3, bei dem die Drähte der Verstärkungsstruktur vom Karkassentyp vom textilen Typ und die Drähte der Scheitelverstärkung vom metallischen Typ sind.

5. Luftreifen nach einem der vorhergehenden Ansprüche, bei dem die Bereiche der Drahtenden der Scheitelverstärkung in Bezug auf das Profil des Drahts der benachbarten Verstärkungsstruktur vom Karkassentyp radial beabstandet sind.

6. Luftreifen nach einem der vorhergehenden Ansprüche, der ferner mindestens eine zusätzliche Scheitellage aufweist.
